# EUROPÄISCHE PATENTSCHRIFT

(11) **EP 1 894 441 B1**
(45) Veröffentlichungstag und Bekanntmachung des Hinweises auf die Patenterteilung: **11.01.2012**
(21) Anmeldenummer: 06776061.1
(22) Anmeldetag: 20.06.2006
(51) Int. Cl.: H05B 3/74

(54) **SENSOREINRICHTUNG FÜR EINE HEIZEINRICHTUNG**
SENSOR DEVICE FOR A HEATING DEVICE
DISPOSITIF DE DÉTECTION POUR DISPOSITIF DE CUISSON

(30) Priorität: 22.06.2005 DE 102005030555
(43) Veröffentlichungstag der Anmeldung: 05.03.2008
(73) Patentinhaber: E.G.O. ELEKTRO-GERÄTEBAU GmbH, 75038 Oberderdingen (DE)
(72) Erfinder: OSE, Lutz, 75447 Sternenfels (DE); WITTENHAGEN, Wolfgang, 75015 Bretten (DE); BAIER, Martin, 76275 Ettlingen (DE)
(74) Vertreter: Patentanwälte Ruff, Wilhelm, Beier, Dauster & Partner
(86) Internationale Anmeldenummer: PCT/EP2006/005893
(87) Internationale Veröffentlichungsnummer: WO 2006/136363

(56) Entgegenhaltungen:
- EP-A2- 0 933 626
- WO-A-99/34178
- WO-A-03/081952
- DE-A1- 10 035 745
- DE-A1- 10 135 270
- DE-A1- 19 526 091

## Beschreibung

Die Erfindung betrifft eine Sensoreinrichtung mit Sensorsignalverarbeitung für eine Heizeinrichtung unter einer Abdeckung gemäß dem Oberbegriff des Anspruchs 1. Beispielsweise kann dies eine Strahlungsheizung unter einem Glaskeramik-Kochfeld sein, auf dem ein Topf mit Inhalt steht, welcher erwärmt werden soll. Die Sensoreinrichtung mit Signalverarbeitung weist mindestens zwei unterschiedliche Sensoren, für unterschiedliche physikalische Größen wie Temperatur und Induktivität, in einer Baueinheit, vorzugsweise in einem Gehäuse auf.

Es ist aus der WO 99/34178 bekannt, einen Temperatur-Sensor als Messwiderstand aus Platin auf ein Keramiksubstrat aufzubringen. Es ist des weiteren aus der EP 933 626 A2 bekannt, einen Sensor auf einen Träger aufzubringen, welcher zumindest einen Teil einer Ummantelung für den Sensor bildet. Diese Ummantelung hat die Aufgabe, den Sensor zu schützen.

Es ist aus der EP 1 215 940 A2 bekannt, eine elektromechanische Übertemperatur-Sicherung in Rohrform mit thermischer Ausdehnung an einem Strahlungsheizkörper unter einem Glaskeramik-Kochfeld vorzusehen. Sie übergreift zumindest einen Teil der Heizfläche und verhindert, dass die Unterseite des Glaskeramik-Kochfeldes zu heiß wird.

Es ist aus der WO 03/081952 A1 bekannt, einen Temperatursensor zur Bestimmung der Temperatur eines Glaskeramik-Kochfeldes als Widerstandsbahn auf einem Träger auszubilden, wobei der Träger über einem Strahlungsheizkörper verläuft. Um Temperatureinflüsse durch den Strahlungsheizkörper auf die Erfassung der Temperatur des Glaskeramik-Kochfeldes zu vermeiden, ist eine thermische Dämmung bzw. Abschirmung nach unten vorgesehen.

Die DE 100 357 45 beschreibt eine Sensoreinrichtung für eine Strahlungsheizung, bei der ein Temperatursensor von einer oberhalb der Strahlungsheizung verlaufenden Sensorschleife getragen wird. Der Temperatursensor ist dabei mit elektrischen Zuleitungen versehen, die an eine außerhalb der Strahlungsheizung angeordnete Steuerung geführt sind.

Es ist des weiteren bekannt, die vorgenannten Sensoren in einem Strahlungsheizkörper zu platzieren und durch elektrische Leiter mit einer Auswerteelektronik zu verbinden. Aufgrund der Vielzahl von Leitern, deren Länge und Position sowie der kleinen Sensorsignale ist eine sichere Auswertung schwierig, aufwendig und störanfällig.

### Aufgabe und Lösung

Der Erfindung liegt die Aufgabe zugrunde, eine eingangs genannte Sensoreinrichtung zu schaffen, mit der die Nachteile des Standes der Technik vermieden werden können und in der insbesondere mehrere Funktionen einer Sensoreinrichtung auf kleinem Raum kombiniert werden können.

Gelöst wird diese Aufgabe durch eine Sensoreinrichtung mit den Merkmalen des Anspruchs 1. Vorteilhafte oder bevorzugte Ausgestaltungen der Erfindung sind Gegenstand der weiteren Ansprüche und werden im folgenden näher erläutert. Der Wortlaut der Ansprüche wird durch ausdrückliche Bezugnahme zum Inhalt der Beschreibung gemacht. Erfindungsgemäß ist vorgesehen, dass die Sensoreinrichtung ein Sensorgehäuse aufweist, in welchem der Temperatur-Sensor, insbesondere zu seinem Schutz, zwischen Heizeinrichtung und Abdeckung angeordnet ist. Des weiteren weist die Sensoreinrichtung einen elektromagnetischen bzw. induktiv messenden Sensor auf, der verschiedene Funktionen erfüllen kann, wie nachfolgend erläutert werden wird. Das Sensorgehäuse wird zumindest als Teil des elektromagnetischen Sensors verwendet. So kann das Sensorgehäuse eine Doppelfunktion übernehmen, nämlich einerseits den Schutz des Temperatur-Sensors und andererseits als Sensorelement für den elektromagnetischen Sensor. Die Signalverarbeitung für die Sensoreinrichtung, bzw. den oder die Sensoren, bzw. die elektronische Sensorsignalverarbeitung, ist nahe oder sogar sehr nahe an zumindest einem Sensor bzw. dem Temperatur-Sensor angeordnet. Vorteilhaft beträgt der Abstand nur wenige cm, so dass Messverfälschungen minimiert werden können. Insbesondere werden durch den kurzen Signalweg Störungen auf den unter Umständen schwachen elektrischen gemessenen Signalen verringert. Die Sensorsignalverarbeitung hat zur Hauptfunktion, die reinen Sensorsignale so aufzubereiten, dass sie störungssicher zu einer Auswerteelektronik des Elektro-Gerätes auch über relativ lange Entfernungen übertragen werden können.

Der Temperatur-Sensor ist vorteilhaft dazu ausgebildet, eine Abdeckung, insbesondere ein Glaskeramik-Kochfeld, vor einer Überhitzung zu schützen. Beispielsweise für Glaskeramik-Kochfelder sollte eine Maximaltemperatur um 600°C an der Oberfläche nicht überschritten werden.

Die Sensorsignalverarbeitung weist bevorzugt einen elektronischen integrierten Schaltkreis (IC) auf. Um vorzugsweise nur einen einzigen Schaltkreis vorsehen zu müssen, kann dieser als ASIC (Application Specific Integrated Circuit) ausgeführt sein. Besonders bevorzugt ist er in der SOI-Technologie (Silicon-On-Insulator) ausführt. Schaltkreise dieser Technologie sind für den Betrieb bei Umgebungstemperaturen von 250°C geeignet. Dabei kann wegen Temperaturproblemen ein Chip-Gehäuse weggelassen werden bzw. ein ungehäuster Schaltkreis verwendet werden, beispielsweise als sogenannter Die, also als Plättchen aus Halbleitermaterial. Andererseits kann ein temperaturbeständiges Gehäuse, beispielsweise ein Keramikgehäuse, für eine bessere Handhabung des Chips verwendet werden.

Vorteilhaft ist die Sensorsignalverarbeitung zur störungsfreien analogen und/oder digitalen Weiterleitung zu einer Auswerteeinheit oder Gerätesteuerung odgl. des Elektrogerätes ausgebildet. Das kann vor allem durch die räumlich nahe Anordnung der Sensorsignalverarbeitung zum Sensor erreicht werden.

Die Sensorsignalverarbeitung über einen seriellen Bus mit einer Auswerteeinheit verbunden sein. Vorzugsweise ist der serielle Bus zur Übertragung der Daten in einem Simplex-, Halbduplex-, Duplex- oder Vollduplex-Verfahren ausgebildet. Des weiteren kann er als synchroner oder asynchroner Bus ausgebildet sein. Bei einem synchronen Bus ist bevorzugt die Taktleitung gleichzeitig ein Systemtakt für die Sensorsignalverarbeitung.

Eine Energieversorgung der Sensorsignalverarbeitung kann bei einer Ausgestaltung der Erfindung aus dem Datenbus erfolgen.

Vorteilhaft ist die Sensorsignalverarbeitung oder ein entsprechendes Bauteil für die Sensoreinrichtung bzw. die Sensoren in dem Sensorgehäuse angeordnet. So kann sie ebenfalls geschützt sein und die Abstände bzw. Signalstrecken können möglichst kurz gehalten werden.

Erfindungsgemäß ist die vorgenannte Sensorsignalverarbeitung der Sensoreinrichtung bzw. für den Temperatur-Sensor auf dem Träger der Sensorik angebracht. So ist eine räumliche Nähe und eine elektrische Verbindung leichter möglich. Durch die besondere Gestaltung des Sensors kann die Sensorsignalverarbeitung zwar außerhalb, jedoch nahe der Heizeinrichtung angeordnet sein.

Auf dem Träger können Kontaktflächen odgl. vorgesehen sein, über die die Sensorsignalverarbeitung nach ihrem Aufbringen auf den Träger mit den Sensoren, insbesondere dem Temperatur-Sensor und/oder dem elektromagnetischen Sensor, verbunden wird. Vorzugsweise erfolgt dies über Draht-Bonds. Auf dem Träger können auch weitere Kontaktflächen zum Anschluß weiterer Sensoren an die Sensorsignalverarbeitung vorgesehen sein, insbesondere weiterer Temperatursensoren. Dabei können diese weiteren Sensoren auf einem anderen Träger angeordnet sein, unter Umständen aber im gleichen Gehäuse. Darüber hinaus können auf dem Träger weitere Bauteile durch Löt-, Leitklebe- oder Schweißverfahren befestigt sein.

Der elektromagnetische bzw. induktive Sensor kann gemäß einer Ausbildung der Erfindung ein Topferkennungs-Sensor sein, mit dem ein Topf, die Topfgröße und/oder die magnetischen Eigenschaften des Bodens eines Behälters oder Topfes auf der Abdeckung festgestellt werden können. Durch eine Erkennung von Topf, Topfgröße und/oder Topfposition kann vermieden werden, dass die Heizeinrichtung betrieben wird, wenn sich gar kein oder ein falscher Topf darüber befindet. Dies ist aus Gründen der Sicherheit sowie Energieeinsparung erstrebenswert.

Gemäß einer anderen Ausbildung der Erfindung kann der elektromagnetische Sensor der Temperaturermittlung des auf der Abdeckung stehenden zu erhitzenden Topfes dienen. Beispielsweise kann die Temperatur des Topfbodens durch Erfassung seiner sich verändernden physikalischen Eigenschaften gemessen werden. Mit der Temperatur des Topfes ändert sich auch die Permeabilität und die elektrische Leitfähigkeit.

Vorteilhaft ist das Sensorgehäuse länglich, insbesondere ein Rohr. Es kann elektrisch leitfähig sein, wobei vorteilhaft ein Metallrohr verwendet wird. In weiterer Ausgestaltung der Erfindung ist es möglich, dass an derjenigen Seite des Sensorgehäuses, welche der Abdeckung zugewandt ist, Öffnungen oder Schlitze vorgesehen sind. Dadurch kann die Empfindlichkeit der Temperaturerfassung an der Abdeckung durch den Temperatur-Sensor verändert werden. Alternativ zu Öffnungen kann die Wandungsstärke des Sensorgehäuses in diesem Bereich dünner ausgeführt sein.

Eine weitere Möglichkeit besteht darin, dass das Sensorgehäuse, insbesondere wenn es ein Rohr mit runder Grundform ist, an der zur Abdeckung hin weisenden Seite abgeflacht bzw. gerade ist. Dadurch können das Sensorgehäuse und somit auch der darin enthaltene Temperatur-Sensor noch näher an der Abdeckung anliegen. Es kann alternativ ein eckiges Profil für das Sensorgehäuse vorgesehen sein, beispielsweise ein Dreieck- oder Viereckprofil.

Das Sensorgehäuse sollte eine gewisse Länge aufweisen, so dass es vom Rand der Heizeinrichtung bis mindestens zu einem Mittenbereich der Heizeinrichtung reicht. Dabei kann es vorteilhaft im wesentlichen gerade bzw. stabförmig sein. Das Sensorgehäuse kann über den Mittenbereich hinaus ragen, insbesondere bis auf die andere Seite, besonders dann, wenn das Sensorgehäuse gleichzeitig als induktiver Sensor verwendet wird. Ist die Heizeinrichtung in mehrere Bereiche unterteilt, welche eigenständig angesteuert werden können, übergreift das Sensorgehäuse vorteilhaft jeden dieser Heizbereiche zumindest teilweise. Die Ausbildung eines gebogenen Sensorgehäuses ist ebenso möglich, insbesondere als Teilkreis oder sogar als ganzer Kreis nach Art einer einwindigen Schleife.

Bei einer weiteren Ausbildung, bei der das Sensorgehäuse als induktiver Sensor verwendet werden kann, reicht das Sensorgehäuse vom einen Rand der Heizeinrichtung bis zum anderen Rand. Dort kann es elektrisch mit Teilen der Heizeinrichtung verbunden sein.

Des weiteren kann vorgesehen sein, dass der Temperatur-Sensor am Randbereich bzw. außerhalb des Mittelbereichs der Heizung verläuft, also exzentrisch. Bevorzugt kann dies sogar an der Seite sein, insbesondere dann, wenn die Heizeinrichtung nur einen Heizbereich aufweist.

In weiterer Ausgestaltung der Erfindung ist es möglich, den Temperatur-Sensor in zwei oder mehr Bereiche zu unterteilen oder zwei oder mehr Temperatur-Sensoren vorzusehen. Diese mehrfache Ausführung hat den Vorteil, dass dadurch jeweils unterschiedlichen Bereichen der Heizeinrichtung ein eigenständiger Temperatur-Sensor oder zumindest ein eigener Bereich des Temperatur-Sensors zugeordnet sein kann. So können unterschiedliche Bereiche der Heizeinrichtung separat bzw. unabhängig voneinander überwacht werden. Dabei kann die Heizeinrichtung in mehrere Heizbereiche aufgeteilt sein, welche getrennt ansteuerbar sind. Jedem Heizbereich ist mindestens ein eigener Temperatur-Sensor oder ein Bereich eines solchen Sensors zugeordnet. Die Zuordnung erfolgt vorteilhaft durch eine nahe räumliche Anordnung, insbesondere zwischen dem Heizbereich und einer Abdeckung. Es können auch Temperatur-Sensoren außerhalb des Heizbereichs angeordnet sein, beispielsweise an einer Halterung oder einem Aufnahmeteller für die Heizeinrichtung.

Zur Auswertung kann vorgesehen sein, dass die Bereiche des Temperatur-Sensors oder einzelne Temperatur-Sensoren als Messbrücke verschaltet sind. So können auch kleine Differenzen im Widerstand und somit auch in der Temperatur genauer ausgewertet werden. Für den Temperatur-Sensor kommen alle temperaturabhängigen Materialen, die für den Temperaturbereich geeignet sind, in Frage. Vorteilhaft wird als Material für den Temperatur-Sensor Platin eingesetzt. Der Sensor kann je nach Anforderung unterschiedlich weit über die Heizkörperoberfläche ragen, bzw. auch einen größeren Bereich der Heizkörperoberfläche überdecken.

Bezüglich der Ausbildung eines Temperatur-Sensors kann vorgesehen sein, ihn auf einem Träger anzuordnen. Der Träger ist vorteilhaft ein Keramik-Träger. Der Sensor kann beispielsweise in Dünn- oder Dickschichttechnik auf den Träger aufgebracht sein. Er kann zumindest teilweise mäanderförmig oder in Schleifen verlaufen, um auf begrenzter Fläche eine größere Länge zu erreichen. Der Träger kann zusätzlich zu dem Temperatur-Sensor auch Kontaktflächen für einen Anschluss an eine Auswertung oder Steuerung aufweisen. Diese Kontaktflächen können beispielsweise derart ausgebildet sein, dass sie durch Einstecken in einen Halter mit mehreren Kontaktfedern kontaktiert werden können.

Der Träger kann beispielsweise auch an einem weiteren Halter oder in einem Gehäuse aus Isoliermaterial angeordnet sein. Hierfür bietet sich Keramikmaterial, beispielsweise Steatit, an. Es kann auch vorgesehen sein, dass die vorgenannten Kontaktflächen mit elektrischen Anschlüssen an dem Halter oder Gehäuse zusammenwirken, insbesondere durch einen sich beim Zusammenbau ergebenden Kontakt. Es ist auch vorteilhaft, wenn die Signalverarbeitung der Sensoreinrichtung an dem Halter oder in dem Gehäuse angeordnet ist. Dadurch sind die Signalwege wiederum kurz und es ist möglich, die Sensoreinrichtung als eine Baueinheit zu fertigen, welche ein leicht verarbeitbares Signal abgibt.

Der Halter bzw. das Gehäuse können so ausgebildet sein, dass sie relativ leicht an einer Heizeinrichtung oder einer Halterung dafür angebracht werden können. Hierzu kann eine lösbare Befestigung vorgesehen sein, beispielsweise durch Anklemmen, Festschrauben oder Aufstecken mit verdrehbaren Befestigungslaschen.

### Kurzbeschreibung der Zeichnungen

Ausführungsbeispiele der Erfindung sind in den Zeichnungen schematisch dargestellt und werden im folgenden näher erläutert. In den Zeichnungen zeigt:
- Fig. 1: eine Draufsicht auf eine Sensoreinrichtung mit Kontaktflächen, einem Schaltkreis und einer Widerstandbahn auf einem Träger,
- Fig. 2: einen Schnitt durch ein rohrförmiges Sensorgehäuse über einer Strahlungsheizung unter einem Glaskeramik-Kochfeld, wobei in dem Rohr die Sensoreinrichtung nach Fig. 1 angeordnet ist und
- Fig. 3: eine Schrägdarstellung eines Strahlungsheizkörpers, an dem seitlich eine Halterung mit einem länglichen, rohrartigen Sensorgehäuse angeordnet ist, welches über die Heizfläche reicht.

### Detaillierte Beschreibung der Ausführungsbeispiele

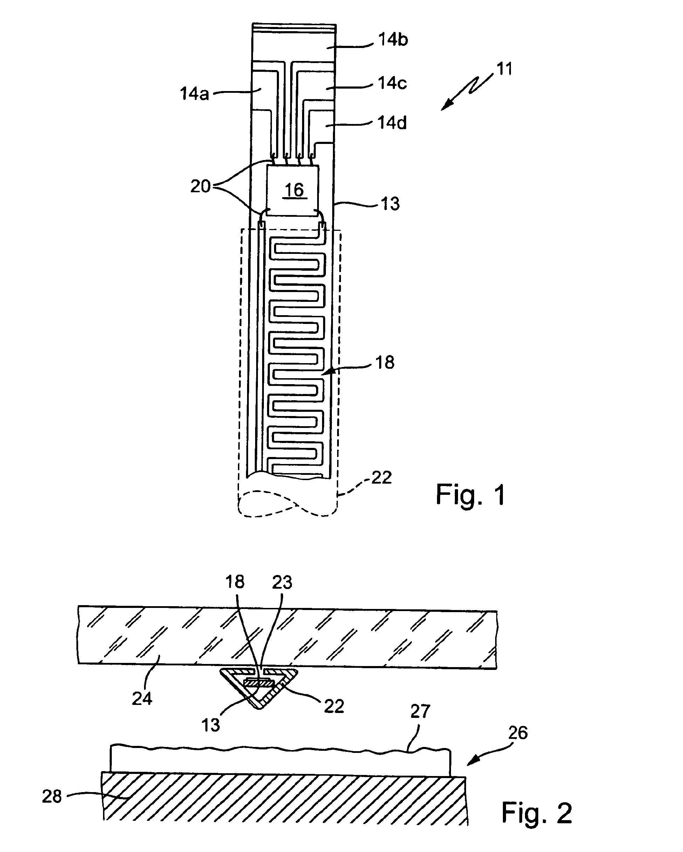

In Fig. 1 ist ein Sensor 11 dargestellt, welcher auf einem Träger 13 aufgebaut ist. Der Sensor weist vier Kontaktflächen 14a - 14d auf, einen elektronischen Schaltkreis 16 als Sensorsignalverarbeitung und eine Widerstandsbahn 18. Die Kontaktflächen 14 sind aus üblichem Material auf den Träger 13 aufgebracht, welcher ein Keramiksubstrat sein kann. Mittels Draht-Bonds 20 wird der elektronische Schaltkreis 16 mit den Kontaktflächen 14 und mit der Widerstandsbahn 18 elektrisch leitend verbunden. Der Schaltkreis 16 bzw. die Sensorsignalverarbeitung kann dabei auch ohne ein für beispielsweise IC's typisches Gehäuse ausgeführt sein und direkt auf den Träger 13 aufgebracht sein.

Die Widerstandsbahn 18 weist links eine geradlinige Zuführung und rechts eine mäanderförmige Rückführung auf, um eine möglichst große Gesamtlänge zu erzeugen. Die als Temperatur-Sensor arbeitende Widerstandsbahn 18 ist an sich wie ein üblicher Temperatur-Sensor mittels Widerstandsmessung ausgebildet. Er kann beispielsweise aus Platin mit verschiedenen Kaltwiderständen bestehen, insbesondere mit einer Pt-1000-Charakteristik. Auch dieses Material wird auf an sich übliche Art und Weise auf den Träger 13 aufgebracht, beispielsweise in Dünn- oder Dickschichttechnik.

Des weiteren ist ein rohrartiges Gehäuse 22 gestrichelt dargestellt, in welchem der Träger 13 angeordnet ist. Über die aus dem Gehäuse 22 ragenden Kontaktflächen 14 erfolgt beispielsweise mittels Klemmkontakten, Anlöten oder Anschweißen von Verbindungsdrähten eine elektrische Kontaktierung des Sensors 11 bzw. der Sensorsignalverarbeitung 16 an eine Ansteuerung oder Auswertung bzw. eine Kochfeldsteuerung sowie evtl. weitere Sensoren.

In Fig. 2 ist zu erkennen, wie das Gehäuse 22 unterhalb eines Glaskeramik-Kochfeldes 24 und oberhalb einer Strahlungsheizung 26, bestehend aus Heizleiter 27 und Heizleiterträger 28, verläuft. Es ist zu erkennen, wie das rohrartige Gehäuse 22 einen dreieckigen Querschnitt aufweist. Dies ermöglicht es, den darin angeordneten Sensor 11 mit der nach oben weisenden Widerstandsbahn 18 möglichst nahe an der Unterseite des Glaskeramik-Kochfeldes 24 zu platzieren. Bei einem kreisrunden Sensorgehäuse wäre der Abstand zwangsläufig größer aufgrund der Rundung.

Des weiteren ist zu erkennen, wie das Gehäuse 22 an seiner Oberseite einen Schlitz 23 aufweist. Diese kann sich entweder über die ganze Länge hinziehen. Alternativ kann er von Verbindungsstegen unterbrochen sein, um den mechanischen Zusammenhalt des Gehäuses 22 aufrechtzuerhalten. Der Vorteil des Schlitzes 23 liegt darin, dass Wärmestrahlung von dem Glaskeramik-Kochfeld 24 nach unten, durch welche auf die Temperatur der Glaskeramik geschlossen werden kann, direkt auf den Sensor 11 treffen kann. Es gibt also keine Isolationswirkung oder Verzögerung durch eine dazwischenliegende Gehäusewandung. Des weiteren dient die Unterseite des Gehäuses 22 dazu, den Sensor 11 bzw. die Widerstandsbahn 18 als Temperatur-Sensor vor der direkten Wärmestrahlung der Heizleiter 27 zu schützen.

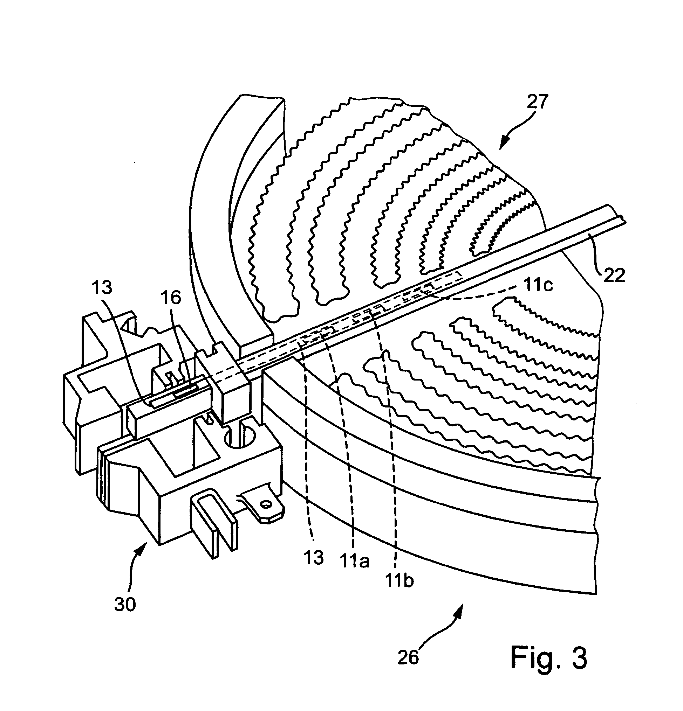

In Fig. 3 ist gemäß einer alternativen Ausgestaltung bzw. Weiterbildung der Erfindung eine tellerartige Strahlungsheizung 26 dargestellt, an deren Rand eine Halterung 30 angebracht ist. Diese weist Kontaktfahnen für den elektrischen Anschluss der Heizleiter 27 auf. Des weiteren ist an der Halterung 30 das rohrartige Gehäuse 22 angebracht, welches über die Mitte der Strahlungsheizung 26 hinaus reicht und die Heizleiter 27 bzw. eine dadurch gebildete Heizfläche überragt.

In dem Gehäuse 22 sind auf einem gestrichelt dargestellten Träger 13 drei gestrichelt dargestellte Temperatur-Sensoren 11a bis 11c mit Abständen zueinander angeordnet. Dadurch ist es möglich, dass jeweils verschiedene Bereiche des darüber angeordneten Glaskeramik-Kochfeldes 24 überwacht werden können. Elektrische Zuleitungen zu den Temperatur-Sensoren 11 verlaufen in dem Gehäuse 22 zu der Halterung 30. In der Halterung 30 ist schematisch die Sensorsignalverarbeitung 16 dargestellt, welche die Signale der Sensoren 11a bis 11 c auswertet und an eine Steuerung für die Strahlungsheizung 26 weitergibt. Die Halterung 30 kann so ausgebildet sein, wie sie derzeit für sogenannte Stabregler verwendet wird, welche als Übertemperatursicherung für die Glaskeramik bei Strahlungsheizkörpern im Einsatz sind.

Des weiteren kann das Gehäuse 22 als sogenannter Topferkennungs-Sensor verwendet werden. Dazu sollte es elektrisch leitfähig sein, insbesondere ein Metallrohr sein. Ein derartiger Topferkennungs-Sensor in gerader Form ist beispielsweise aus der DE 101 35 270 A1 bekannt, auf welche diesbezüglich ausdrücklich Bezug genommen wird. Die Sensoren 11 und das Gehäuse 22 in Verbindung mit einer geeigneten Steuerung bzw. Sensorsignalverarbeitung, beispielsweise in dem Schaltkreis 16, bilden die erfindungsgemäße Sensoreinrichtung. Alternativ ist es auch möglich, an einem einzigen langen Träger mehrere elektrisch und räumlich getrennte Temperatursensoren auszubilden, die räumlich so verteilt sind wie in Fig. 3 die Temperatur-Sensoren 11a bis c. So kann ein einziger Träger mit einem einzigen Schaltkreis bzw. einer einzigen Sensorsignalverarbeitung 16 und mehreren Temperatur-Sensoren vorgesehen sein, wobei der Träger weitestgehend in dem Gehäuse 22 verläuft und sich der Teil des Trägers 13 mit der Sensorsignalverarbeitung 16 in der Halterung 30 befindet. So ist die Sensorsignalverarbeitung 16 vor Überhitzung geschützt und gleichzeitig relativ nahe an den Sensoren 11.

Durch die versetzt angeordneten Sensoren und die dadurch mögliche lokale Temperaturmessung ist es bei beiden Ausführungen einerseits möglich, an mehreren Stellen lokale Temperaturerhöhungen an der Glaskeramik festzustellen und durch Abschalten der Heizung 26 zu vermeiden. Andererseits ist durch die Wärmeabnahme an der Glaskeramik durch einen aufgestellten Topf eine Erkennung der Topfposition bzw. der Topfgröße durch allgemeine Überdeckung einer Stelle durch einen Topf möglich. Steigt also die Temperatur am Sensor 11a schnell stark an, an den Sensoren 11 bund 11 c dagegen langsamer, so kann daraus geschlossen werden, dass sich oberhalb des Sensors 11 a kein Topf befindet, der die von der Heizung 26 erzeugte Wärme von der Glaskeramik 24 abnimmt. Entspricht dies einem nicht gewünschten Betriebszustand, so kann dies entweder an einen Benutzer gemeldet werden oder die Heizeinrichtung 26 abgeschaltet werden. Alternativ kann bei einer Unterteilung der Heizleiter 27 in mehrere Kochzonen die jeweils überdeckte Kochzone aktiviert werden und eine nicht überdeckte Kochzone deaktiviert werden.

Des weiteren ist es möglich, wenn der Sensor 11 bzw. der Träger 13 und damit auch die darauf angebrachte Widerstandsbahn 18 sehr lang sind, dass sie im wesentlichen die gesamte Fläche der Heizleiter 27 überdecken. So kann eine integrale Temperaturmessung über der Strahlungsheizung 26 stattfinden. Es ist auch möglich, einen solchen gemessenen Bereich weitaus kleiner vorzusehen als die gesamte Heizfläche, beispielsweise nur über einige Zentimeter hinweg.

Bei einem Ausführungsbeispiel der Erfindung ist es also möglich, einen Sensor zu schaffen, welcher auf einem Träger Kontakte, einen elektronischen Schaltkreis als Sensorsignalverarbeitung und eine temperaturabhängige Widerstandsbahn zur Temperaturmessung aufweist. Dieser Sensor bzw. der Träger ist in einem rohrartigen Gehäuse über einer Strahlungsheizung angeordnet. Das Gehäuse wird als elektromagnetisch arbeitender Topferkennungssensor verwendet. Dadurch können die Funktionen Temperaturmessung und/oder Topferkennung in einer besonders vorteilhaften Sensoreinrichtung kombiniert werden. Durch das Vorsehen der Sensorsignalverarbeitung nahe an dem Sensor ist eine einfachere und störungsunempfindlichere Übertragung der vorverarbeiteten Sensorsignale möglich.

## Patentansprüche

1. Sensoreinrichtung für eine unter einer Abdeckung angebrachte Heizeinrichtung (26), vorzugsweise zur Anordnung an einer Strahlungsheizung unter einem Glaskeramik-Kochfeld (24) zur Erhitzung von Nahrungsmitteln in einem auf der Abdeckung stehenden Behälter oder Topf zur Nahrungsmittelzubereitung, wobei die Sensoreinrichtung zwischen Heizeinrichtung und Abdeckung anordenbar ist und ein Sensorgehäuse (22) mit einem Temperatur-Sensor (11) darin aufweist, **dadurch gekennzeichnet, dass** die Sensoreinrichtung zusätzlich einen elektromagnetischen Sensor aufweist, wobei das Sensorgehäuse (22) Teil des elektromagnetischen Sensors ist und wobei eine Sensorsignalverarbeitung (16) für die Sensoreinrichtung bzw. für den Temperatur-Sensor (11) nahe an zumindest diesem Temperatur-Sensor angeordnet ist, vorzugsweise mit wenigen cm Abstand, wobei die Sensorsignalverarbeitung (16) für die Sensoreinrichtung bzw. für den Temperatur-Sensor (11) auf einem gleichen Träger (13) angeordnet ist wie der Temperatur-Sensor (11).

2. Sensoreinrichtung nach Anspruch 1, **dadurch gekennzeichnet, dass** sie eine Baueinheit bildet, wobei vorzugsweise die Sensorsignalverarbeitung (16) außerhalb des Sensorgehäuses (22) angeordnet ist.

3. Sensoreinrichtung nach Anspruch 1 oder 2, **dadurch gekennzeichnet, dass** die Sensorsignalverarbeitung (16) außerhalb eines von der Heizeinrichtung (26) direkt beheizten Bereiches angeordnet ist.

4. Sensoreinrichtung nach Anspruch 1, **dadurch gekennzeichnet, dass** auf dem Träger (13) Kontaktflächen (14a - 14d) vorgesehen sind, wobei die Sensorsignalverarbeitung (16) nach dem Aufbringen mit den Kontaktflächen verbunden ist, vorzugsweise über Draht-Bonds (20), und insbesondere auch mit dem Temperatur-Sensor (11) und/oder dem elektromagnetischen Sensor verbunden ist.

5. Sensoreinrichtung nach Anspruch 4, **dadurch gekennzeichnet, dass** auf dem Träger (13) Kontaktflächen (14a - 14d) vorgesehen sind zum Anschluß an eine externe Gerätesteuerung und/oder zum Anschluß weiterer Sensoren an die Sensorsignalverarbeitung (16), insbesondere von Temperatursensoren.

6. Sensoreinrichtung nach einem der Ansprüche 1 oder 3 bis 5, **dadurch gekennzeichnet, dass** auf dem Träger (13) weitere Bauteile vorgesehen sind, insbesondere Temperatursensoren, zum Anschluß an die Sensorsignalverarbeitung (16).

7. Sensoreinrichtung nach einem der vorhergehenden Ansprüche, **dadurch gekennzeichnet, dass** die Sensorsignalverarbeitung einen elektronischen Schaltkreis (16) aufweist, vorzugsweise einen einzigen elektronischen Schaltkreis, der insbesondere in Silicon-On-Insulator Technologie ausgebildet ist.

8. Sensoreinrichtung nach einem der vorhergehenden Ansprüche, **dadurch gekennzeichnet, dass** die Sensorsignalverarbeitung (16) ausgebildet ist zur störungsfreien analogen und/oder digitalen Weiterleitung der Sensorsignale zu einer Auswerteeinheit oder Gerätesteuerung odgl..

9. Sensoreinrichtung nach Anspruch 8, **dadurch gekennzeichnet, dass** die Sensorsignalverarbeitung (16) über einen seriellen Bus mit einer Auswerteeinheit verbunden ist, wobei vorzugsweise der serielle Bus zur Übertragung der Daten in einem Simplex-, Halbduplex-, Duplex- oder Vollduplex- Verfahren ausgebildet ist und/oder insbesondere als synchroner oder asynchroner Bus ausgebildet ist.

10. Sensoreinrichtung nach Anspruch 8 oder 9, **dadurch gekennzeichnet, dass** bei einem synchronen Bus die Taktleitung gleichzeitig ein Systemtakt für die Sensorsignalverarbeitung (16) ist.

11. Sensoreinrichtung nach Anspruch 9 oder 10, **gekennzeichnet durch** eine Energieversorgung der Sensorsignalverarbeitung (16) aus dem Datenbus.

12. Sensoreinrichtung nach einem der vorhergehenden Ansprüche, **dadurch gekennzeichnet, dass** der elektromagnetische bzw. induktive Sensor (22) ein Topferkennungs-Sensor für die Erkennung eines Topfes ist, insbesondere hinsichtlich Topfgröße und/oder Topfposition.

13. Sensoreinrichtung nach einem der Ansprüche 1 bis 11, **dadurch gekennzeichnet, dass** der elektromagnetische Sensor (22) ein Temperaturermittlungs-Sensor ist für eine Temperaturermittlung des auf der Abdeckung (24) stehenden zu erhitzenden Topfes, insbesondere zur Erfassung der Temperatur des Topfbodens durch Erfassung der sich verändernden Eigenschaften des Topfbodens hinsichtlich seiner relativen magnetischen Permeabilität und seinem spezifischen elektrischen Widerstand.

14. Sensoreinrichtung nach einem der vorhergehenden Ansprüche, **dadurch gekennzeichnet, dass** das Sensorgehäuse ein elektrisch leitfähiges Rohr (22) ist, insbesondere ein Metallrohr, wobei vorzugsweise die der Abdeckung (24) zugewandte Seite Öffnungen (23) aufweist, insbesondere geschlitzt ist, zur Verbesserung des Wärmeeintrages zum Temperatur-Sensor (11) hin.

15. Sensoreinrichtung nach einem der vorhergehenden Ansprüche, **dadurch gekennzeichnet, dass** das Sensorgehäuse (22) zumindest an der zur Abdeckung (24) hin weisenden Seite abgeflacht ist, wobei es vorzugsweise ein Rohr mit einem eckigen Profil aufweist, insbesondere ein Dreieck- oder Viereckprofil.

16. Sensoreinrichtung nach einem der vorhergehenden Ansprüche, **dadurch gekennzeichnet, dass** das Sensorgehäuse (22) länglich bzw. gerade ist und zumindest bis zu einem Mittenbereich der Heizeinrichtung (26) reicht, vorzugsweise noch darüber hinaus.

17. Sensoreinrichtung nach einem der vorhergehenden Ansprüche, **dadurch gekennzeichnet, dass** der Temperatur-Sensor (11) exzentrisch zu einem Mittelpunkt bzw. Mittelbereich der Heizeinrichtung (26) angeordnet ist, vorzugsweise an einer Seite.

18. Sensoreinrichtung nach einem der vorhergehenden Ansprüche, **dadurch gekennzeichnet, dass** der Temperatur-Sensor in zwei oder mehr Bereiche unterteilt ist oder zwei oder mehr Temperatur-Sensoren (11a - 11 c) vorhanden sind, welche jeweils unterschiedlichen Flächenbereichen der Heizeinrichtung (26) zugeordnet sind, wobei vorzugsweise die Heizeinrichtung in mehrere getrennt ansteuerbare Heizbereiche unterteilt ist und jedem Heizbereich mindestens ein Bereich des Temperatur-Sensors oder ein Temperatur-Sensor durch nahe räumliche Anordnung zugeteilt ist.

19. Sensoreinrichtung nach einem der Ansprüche 1 bis 17, **dadurch gekennzeichnet, dass** mehrere Temperatur-Sensoren (11a - 11 c) vorhanden sind, die jeweils auf einem eigenen Träger angeordnet sind, insbesondere in dem gleichen Sensorgehäuse (22).

20. Sensoreinrichtung nach Anspruch 18 oder 19, **dadurch gekennzeichnet, dass** ein Temperatur-Sensor (11) den Temperaturkoeffizienten von Platin aufweist, wobei er vorzugsweise eine Pt100 oder Pt1000-Charakteristik aufweist.

21. Sensoreinrichtung nach einem der vorhergehenden Ansprüche, **dadurch gekennzeichnet, dass** ein Temperatur-Sensor (11) auf einem Keramik-Träger (13) angeordnet ist, wobei er insbesondere in Dünnschichttechnik aufgebracht ist und/oder mäanderförmig verläuft.

22. Sensoreinrichtung nach einem der vorhergehenden Ansprüche, **gekennzeichnet durch** elektrische Anschlüsse, welche an einer Halterung (30) oder einem Gehäuse aus isolierendem Material angeordnet sind, wobei insbesondere die Steuerung (16) an oder in der Halterung oder dem Gehäuse angeordnet ist und vorzugsweise die Halterung (30) oder das Gehäuse ausgebildet sind zur Anbringung an einer Heizeinrichtung (26) **durch** eine lösbare Befestigung.

## Claims

1. Sensor device for a heating device (26) fitted under a cover plate, preferably for arrangement with a radiant heater below a ceramic glass hob plate (24) for heating food in a food preparation container or saucepan standing on said cover plate, said sensor device being adapted to be located between said heating device and said cover, and a sensor housing (22) with a temperature sensor (11) therein is provided in said cover,
**characterized in that**
said sensor device additionally has an electromagnetic sensor, wherein said sensor housing (22) is part of said electromagnetic sensor, and wherein a sensor signal processing means (16) for said sensor device or said temperature sensor (11) is positioned close to at least said temperature sensor, preferably positioned at a distance of a few cm, wherein said sensor signal processing means (16) for said sensor device or said temperature sensor (11) is placed on a support (13) on which also said temperature sensor (11) is placed.

2. Sensor device according to claim 1, **characterized in that** it is formed as a module, wherein preferably said sensor signal processing means (16) is located outside said sensor housing (22).

3. Sensor device according to claim 1 or 2, **characterized in that** said sensor signal processing means (16) is located outside an area heated directly by said heating device (26).

4. Sensor device according to claim 1, **characterized in that** on said support (13) are provided contact surfaces (14a - 14d), wherein said sensor signal processing means (16), after application, are connected to said contact surfaces, preferably via wire bonds (20), and in particular are also connected to said temperature sensor (11) and/or said electromagnetic sensor.

5. Sensor device according to claim 4, **characterized in that** on said support (13) are provided contact surfaces (14a - 14d) for connection to an external appliance control and/or for connection of further sensors to said sensor signal processing means (16), in particular of temperature sensors.

6. Sensor device according to any of the claims 1 or 3 to 5, **characterized in that** on said support (13) are provided further components, in particular temperature sensors, for connection to said sensor signal processing means (16).

7. Sensor device according to any of the preceding claims, **characterized in that** said sensor signal processing means has an electronic circuit (16), preferably one single electronic circuit, in particular constructed in silicon-on-insulator technology.

8. Sensor device according to any of the preceding claims, **characterized in that** said sensor signal processing means (16) is constructed for interference-free analogue and/or digital transfer of said sensor signals to an evaluation or control unit or the like.

9. Sensor device according to claim 8, **characterized in that** said sensor signal processing means (16) is connected via a serial bus to an evaluation unit, wherein preferably said serial bus is constructed for transmission of data in a simplex, half-simplex, duplex or full duplex method, and/or in particular is constructed as a synchronous or asynchronous bus.

10. Sensor device according to claim 8 or 9, **characterized in that** a clock line of a synchronous bus simultaneously serves as a system clock for said sensor signal processing means (16).

11. Sensor device according to claim 9 or 10, **characterized in that** a power supply of said sensor signal processing means (16) is via said data bus.

12. Sensor device according to any of the preceding claims, **characterized in that** said electromagnetic or inductive sensor (22) is a saucepan recognition sensor for recognizing a saucepan, in particular with regard to its size and/or position.

13. Sensor device according to any of the claims 1 to 11, **characterized in that** said electromagnetic sensor (22) is a temperature determination sensor for determining a temperature of a saucepan to be heated standing on said cover plate (24), in particular for determination of the temperature of a bottom of said saucepan by determining varying characteristics of the bottom of said saucepan with respect to a relative magnetic permeability and with respect to a specific electrical resistance thereof.

14. Sensor device according to any of the preceding claims, **characterized in that** said sensor housing is an electrically conductive tube (22), in particular a metallic tube, wherein preferably a side of said tube directed towards said cover plate (24) has openings (23), in particular is slotted, for improving a heat introduction to said temperature sensor (11).

15. Sensor device according to any of the preceding claims, **characterized in that** at least on said side directed towards said cover plate (24) said sensor housing (22) is flattened, and preferably is constructed as a tube with an angular profile, in particular a triangular or quadrangular profile.

16. Sensor device according to any of the preceding claims, **characterized in that** said sensor housing (22) is elongated or straight, and extends at least to a central area of said heating device (26), preferably even beyond.

17. Sensor device according to any of the preceding claims, **characterized in that** said temperature sensor (11) is positioned eccentrically to a central point or central area of said heating device (26), preferably on one side.

18. Sensor device according to any of the preceding claims, **characterized in that** said temperature sensor is subdivided into two or more areas or two or more single temperature sensors (11a-11c) are provided, wherein said sensors are in each case associated with different surface areas of said heating device (26), preferably said heating device being subdivided into several separately controllable heating areas, and with each heating area is associated at least one area of the temperature sensor or one temperature sensor by close spatial positioning thereto.

19. Sensor device according to any of the claims 1 to 17, **characterized in that** there are provided several said temperature sensors (11a-11c) and in each case are placed on an independent support, in particular together in said same sensor housing (22).

20. Sensor device according to claim 18 or 19, **characterized in that** said temperature sensor (11) has a temperature coefficient of platinum, preferably with a Pt100 or Pt1000 characteristic.

21. Sensor device according to any of the preceding claims, **characterized in that** said temperature sensor (11) is placed on a ceramic support (13), and in particular is applied in thin film technology and/or has a meander-like configuration.

22. Sensor device according to any of the preceding claims, **characterized in that** electrical terminals are provided, which are located on a holder (30) or a housing made of insulating material, wherein in particular said control means (16) is placed on said holder or said housing, and preferably said holder (30) or said housing are constructed for fitting by a releasable fastening to a heating device (26).

## Revendications

1. Dispositif de détection pour un dispositif chauffant (26) monté sous un chapeau, de préférence à disposer sur un chauffage rayonnant sous une plaque de cuisson vitrocéramique (24) destinée au chauffage des aliments dans un récipient ou une marmite de préparation de denrées alimentaires qui se trouve sur le chapeau, le dispositif de détection pouvant être disposé entre le dispositif chauffant et le chapeau et présente un boîtier de capteur (22) dans lequel se trouve un capteur de température (11), **caractérisé en ce que** le dispositif de détection présente en plus un capteur électromagnétique, le boîtier de capteur (22) faisant partie du capteur électromagnétique et un dispositif de traitement de signal de capteur (16) pour le dispositif de détection ou pour le capteur de température (11) étant disposé à proximité d'au moins ce capteur de température, de préférence à quelques cm de distance, le dispositif de traitement de signal de capteur (16) pour le dispositif de détection ou pour le capteur de température (11) étant disposé sur un même support (13) que le capteur de température (11).

2. Dispositif de détection selon la revendication 1, **caractérisé en ce qu'**il forme une unité constructive, le dispositif de traitement de signal de capteur (16) étant de préférence disposé à l'extérieur du boîtier de capteur (22).

3. Dispositif de détection selon la revendication 1 ou 2, **caractérisé en ce que** le dispositif de traitement de signal de capteur (16) est disposé à l'extérieur d'une zone directement chauffée par le dispositif chauffant (26).

4. Dispositif de détection selon la revendication 1, **caractérisé en ce que** des surfaces de contact (14a - 14d) sont prévues sur le support (13), le dispositif de traitement de signal de capteur (16) étant relié avec les surfaces de contact après la mise en place, de préférence par le biais de liaisons par fils métalliques (20), et notamment aussi relié avec le capteur de température (11) et/ou le capteur électromagnétique.

5. Dispositif de détection selon la revendication 4, **caractérisé en ce que** des surfaces de contact (14a - 14d) sont prévues sur le support (13) pour le raccordement à une commande d'appareil externe et/ou pour le raccordement de capteurs supplémentaires au dispositif de traitement de signal de capteur (16), notamment de capteurs de température.

6. Dispositif de détection selon l'une des revendications 1 ou 3 à 5, **caractérisé en ce que** des composants supplémentaires sont prévus sur le support (13), notamment des capteurs de température, destinés à être raccordés au dispositif de traitement de signal de capteur (16).

7. Dispositif de détection selon l'une des revendications précédentes, **caractérisé en ce que** le dispositif de traitement de signal de capteur présente un circuit électronique (16), de préférence un circuit électronique unique qui est notamment réalisé en technologie dite silicium sur isolant.

8. Dispositif de détection selon l'une des revendications précédentes, **caractérisé en ce que** le dispositif de traitement de signal de capteur (16) est configuré pour la transmission analogique et/ou numérique sans perturbations des signaux de capteur vers une unité d'interprétation ou une commande d'appareil ou similaire.

9. Dispositif de détection selon la revendication 8, **caractérisé en ce que** le dispositif de traitement de signal de capteur (16) est relié avec une unité d'interprétation par le biais d'un bus série, le bus série étant de préférence configuré pour la transmission des données selon un procédé simplex, semi-duplex, duplex ou duplex intégral et/ou étant notamment configuré sous la forme d'un bus synchrone ou asynchrone.

10. Dispositif de détection selon la revendication 8 ou 9, **caractérisé en ce que** dans le cas d'un bus synchrone, la ligne d'horloge est en même temps une horloge système pour le dispositif de traitement de signal de capteur (16).

11. Dispositif de détection selon la revendication 9 ou 10, **caractérisé par** une alimentation en énergie du dispositif de traitement de signal de capteur (16) depuis le bus de données.

12. Dispositif de détection selon l'une des revendications précédentes, **caractérisé en ce que** le capteur (22) électromagnétique ou inductif est un capteur de détection de marmite pour détecter une marmite, notamment la taille de la marmite et/ou la position de la marmite.

13. Dispositif de détection selon l'une des revendications 1 à 11, **caractérisé en ce que** le capteur électromagnétique (22) est un capteur de détermination de la température pour déterminer une température de la marmite à chauffer posée sur le chapeau (24), notamment pour détecter la température du fond de la marmite en détectant les propriétés qui varient du fond de la marmite du point de vue de sa perméabilité magnétique relative et de sa résistance électrique spécifique.

14. Dispositif de détection selon l'une des revendications précédentes, **caractérisé en ce que** le boîtier de capteur est un tube électriquement conducteur (22), notamment un tube métallique, le côté qui fait face au chapeau (24) présentant de préférence des ouvertures (23), étant notamment fendu, afin d'améliorer l'apport de chaleur vers le capteur de température (11).

15. Dispositif de détection selon l'une des revendications précédentes, **caractérisé en ce que** le boîtier de capteur (22) est aplati au moins sur le côté qui est dirigé vers le chapeau (24), et présente de préférence un tube ayant un profilé anguleux, notamment un profilé triangulaire ou carré.

16. Dispositif de détection selon l'une des revendications précédentes, **caractérisé en ce que** le boîtier de capteur (22) est allongé ou droit et s'étend au moins jusqu'à une zone centrale du dispositif chauffant (26), de préférence encore au-delà de celle-ci.

17. Dispositif de détection selon l'une des revendications précédentes, **caractérisé en ce que** le capteur de température (11) est disposé de manière excentrique par rapport à un point central ou une zone centrale du dispositif chauffant (26), de préférence sur un côté.

18. Dispositif de détection selon l'une des revendications précédentes, **caractérisé en ce que** le capteur de température est divisé en deux zones ou plus ou qu'il existe deux capteurs de température (11a - 11c) ou plus, lesquels sont respectivement associés à des zones différentes de la surface du dispositif chauffant (26), le dispositif chauffant étant de préférence divisé en plusieurs zones de chauffage commandables séparément et au moins une zone du capteur de température ou un capteur de température étant associé à chaque zone de chauffage par une disposition spatialement proche.

19. Dispositif de détection selon l'une des revendications 1 à 17, **caractérisé en ce qu'**il existe plusieurs capteurs de température (11a - 11c), lesquels sont respectivement disposés sur un support propre, notamment dans le même boîtier de capteur (22).

20. Dispositif de détection selon la revendication 18 ou 19, **caractérisé en ce qu'**un capteur de température (11) présente le coefficient de température du platine, en présentant ici de préférence la caractéristique d'une Pt100 ou d'une Pt1000.

21. Dispositif de détection selon l'une des revendications précédentes, **caractérisé en ce qu'**un capteur de température (11) est disposé sur un support en céramique (13), en étant ici notamment appliqué par technique de couche mince et/ou s'étendant en forme de méandre.

22. Dispositif de détection selon l'une des revendications précédentes, **caractérisé par** des raccords électriques qui sont disposés sur un élément de maintien (30) ou un boîtier en matériau isolant, la commande (16) étant notamment disposée sur ou dans l'élément de maintien ou le boîtier et l'élément de maintien (30) ou le boîtier étant de préférence configuré pour être monté sur un dispositif chauffant (26) par le biais d'une fixation amovible.
